# EUROPÄISCHE PATENTANMELDUNG

(11) **EP 4 498 548 A1**
(43) Veröffentlichungstag der Anmeldung: **29.01.2025**
(21) Anmeldenummer: 24183900.0
(22) Anmeldetag: 24.06.2024
(51) Int. Cl.: H02H 3/10, H02H 3/33

(54) **LEITUNGSSCHUTZSCHALTER MIT DIFFERENZSTROMÜBERWACHUNG**

(30) Priorität: 25.07.2023 DE 102023207065
(71) Anmelder: Siemens Aktiengesellschaft, 80333 München (DE)
(72) Erfinder: Karl, Peter, 93057 Regensburg (DE)
(74) Vertreter: Siemens Patent Attorneys

(57) **Zusammenfassung**

Die Erfindung betrifft einen Leitungsschutzschalter zur Unterbrechung eines Schaltkreises. Dieser ist mit einer Unterbrechungseinheit (1,2), einer Differenzstromerfassungseinheit (8) zur Erfassung eines in dem Schaltkreis auftretenden Differenzstroms, einer Prozessoreinheit (7), die zur Auswertung eines mit Hilfe der Differenzstromerfassungseinheit erhaltenen Differenzstromsignals auf Überschreiten eines ersten Schwellenwertes für den Differenzstrom und zur Ausgabe eines ersten Signals bei Überschreiten des ersten Schwellenwerts ausgestaltet ist, und einer Anzeige (4), welche mit der Prozessoreinheit (7) verbunden und für eine durch Empfang des ersten Signals veranlasste Bereitstellung eines Warnsignals ausgestaltet ist, gebildet. Der erfindungsgemäße Leitungsschutzschalter beinhaltet eine Differenzstromüberwachungsfunktion und stellt somit eine aufwands- und platzsparende Realisierung von einer Differenzstromüberwachung dar.

## Beschreibung

Die Erfindung betrifft einen Leitungsschutzschalter zur Unterbrechung eines Schaltkreises.

Differenzstrommessgeräte sind Vorrichtungen, die z.B. mit Hilde eines Nullphasenstromwandler einen Schaltkreis auf das Auftreten von kritischen Differenzstromwerten überwachen. Im Gegensatz zu Fehlerstromschutzschaltern oder RCDs (RCD: residual current device) ist dabei nur eine Meldung der Kritikalität des Differenzstroms und keine Abschaltung vorgesehen (minimale Anforderungen dazu sind im RCM Standard IEC 62020-1 definiert). Ein in einer Anlage angebrachtes Differenzstrommessgerät wird also dazu benutzt, noch vor dem Erreichen der Abschaltschwelle eines RCDs dem Anwender eine Meldung zu geben, dass in der Anlage Fehler vorliegen. Es können so bei sich langsam verschlechternden Werten, etwa durch alternde Isolierungen, Maßnahmen ergriffen werden, um einem Abschalten der Anlage entgegenzuwirken. Über den Differenzstrom kann auf den Isolationswiderstandes geschlossen werden, d.h. Differenzstrommessgeräte innerhalb elektrischer Anlagen erlauben eine selektive Erkennung von Isolationsmängeln.

Es besteht ein Bedarf an effizienten Differenzstrommessgerätlösungen.

Die Aufgabe der Erfindung ist, dazu beizutragen.

Die Aufgabe wird durch einen Schalter zur Unterbrechung eines Schaltkreises nach Anspruch 1 gelöst. Vorteilhafte Weiterbildungen sind in den Unteransprüchen angegeben.

Erfindungsgemäß wird vorgeschlagen, einen Leitungsschutzschalter bzw. MCB zur Unterbrechung eines Schaltkreises mit einer Differenzstromüberwachung - häufig abgekürzt mit RCM (residual current monitoring) - zu versehen. Dabei ist die Ausgabe eines Warnsignals vorgesehen, wenn der Differenzstrom eine kritische Schwelle überschreitet. Für die Unterbrechung des Schaltkreises ist der Schalter mit einer Unterbrechungseinheit versehen. Der Begriff "Unterbrechungseinheit'' ist dabei so zu verstehen, dass mit dieser Einheit der Schaltkreis geschlossen und geöffnet werden kann (Ein- und Ausschalten). Vorzugsweise handelt es sich - wie unten detaillierter ausgeführt - um einen Schutzschalter. Der Schalter kann aber auch für ein betriebsgemäßes Zu- bzw. Wegschalten von Lasten ausgebildet ein. Die Unterbrechungseinheit kann elektromechanisch oder elektronisch realisiert sein.

Der erfindungsgemäße Schalter ist mit einer Differenzstromerfassungseinheit (z.B. auf Basis eines Nullphasenstromwandler oder Summenstromwandlers) zur Erfassung eines in dem (auf Differenzstrom überwachten) Schaltkreis auftretenden Differenzstroms gebildet. Mittels dieser Differenzstromerfassungseinheit ist eine Differenzstromüberwachung realisiert. Das erfasste Signal wird - ggf. bearbeitet durch Filterung oder/und Verstärkung - an eine Prozessoreinheit zur Auswertung übermittelt. Die Prozessoreinheit kann mehrere Hardwareelemente und evtl. Peripherieelemente umfassen. In einer Ausgestaltung ist sie mit einem DSP (digital signal processor) und einer FPU (floating point unit) gebildet. Die Prozessoreinheit ist zur Auswertung des mit Hilfe der Differenzstromerfassungseinheit erhaltenen Differenzstromsignals auf Überschreiten eines ersten Schwellenwertes für den Differenzstrom und zur Ausgabe eines ersten Signals bei Überschreiten des ersten Schwellenwerts ausgestaltet. Der Schalter umfasst eine mit der Prozessoreinheit verbundene Anzeige, an welche das erste Signal ausgegeben wird. Diese Anzeige ist für eine durch Empfang des ersten Signals veranlasste Bereitstellung eines Warnsignals ausgestaltet. Bei dieser Anzeige handelt es sich z.B. um eine oder mehrere LEDs (LED: Light Emitting Diode), auf der bzw. auf denen das Warnsignal mittels Farbe oder/und Blinkmuster kodiert ist.

Die Erfindung erlaubt eine effiziente Integration einer Differenzstromüberwachungsfunktion in einen Schalter zur Unterbrechung eines Schaltkreises.

Gemäß einer Weiterbildung ist der der Schalter mit einer Kommunikationsschnittstelle (insb. Drahtlosschnittstelle) zur Übermittlung von Daten an einen Empfänger zur Verarbeitung oder/und Darstellung versehen und der Prozessor für eine laufende Übermittlung (d.h., eine, während der Schaltkreis Strom führt, in regelmäßigen, von dem Prozessor vorgegebenen Anständen vorgenommene Übermittlung) von auf den erfassten Differenzstrom bezogenen Daten über die Kommunikationsschnittstelle an den Empfänger eingerichtet. Es kann dabei der Schalter für eine Frequenzbandzerlegung des erfassten Frequenzstroms bzw. Frequenzstromsignals ausgebildet sein und die auf den erfassten Differenzstrom bezogenen Daten frequenzbandbezogene Informationen enthalten. Z.B. werden separat Daten per Frequenzband übermittelt. Bei dem Empfänger kann es sich um eine typischerweise zentrale, z.B. für einen oder mehrere Schaltschränke zuständige Überwachungsvorrichtung handeln. Der Empfänger kann aber auch ein Knoten bzw. Datensammler sein, der nur zur Weiterleitung von Daten an z.B. eine zentrale Überwachungsvorrichtung eingesetzt wird.

Gemäß einer Ausgestaltung des Erfindungsgegenstands ist der Schalter für eine Frequenzbandzerlegung des erfassten Frequenzstroms bzw. Frequenzstromsignals ausgebildet, und die Auswertung des mit Hilfe der Differenzstromerfassungseinheit erhaltenen Differenzstromsignals auf Überschreiten eines ersten Schwellenwertes für den Differenzstrom erfolgt frequenzbandspezifisch. Dabei ist der Begriff "Frequenzbandzerlegung" so zu verstehen, dass das Signal in mindestens zwei unterschiedliche Frequenzbereiche unterteilt wird. Beispielsweise wird dann für die Überprüfung des Überschreitens des ersten Schwellenwertes auf das unterste Frequenzband zurückgegriffen, während andere Frequenzbänder für Analysen bzgl. Isolationsfehler, Oberschwingungscharakteristik, Probleme bei Frequenzumrichtern oder EMV-Problematiken herangezogen werden.

Gemäß einer Weiterbildung ist die Prozessoreinheit zur Auswertung des Differenzstromsignals auf Überschreiten eines zweiten, im Vergleich zum ersten höheren Schwellenwertes für den Differenzstrom und zur Ausgabe eines zweiten Signals an die Anzeige bei Überschreiten des zweiten Schwellenwerts ausgestaltet. Gem. dieser Weiterbildung werden zwei Warnschwellen verwendet. Durch die Verwendung von zwei Warnschwellen kann das Bedienpersonal besser die Dringlichkeit einer Maßnahme (z.B. die Reduktion der versorgten Lasten, Insolationsüberprüfung etc.) einschätzen.

Gemäß einer Ausgestaltung ist der Schalter mit einem Strommesselement (z.B. Shunt) zur Überwachung eines im Schaltkreis übertragenen Stroms gebildet und für eine Unterbrechung des Schaltkreises bei Auftreten eines mit Hilfe des Strommesselements erfassten Kurzschlussstroms oder Überlaststroms ausgebildet. Der Schalter umfasst somit die Funktionen eines Leitungsschutzschalters bzw. MCBs (miniature circuit breaker). Ein derartiger Schalter könnte z.B. kurz als MCB+RCM beschrieben werden. Es ist aber auch möglich, dass der Schalter zusätzlich als Differenzstromschutzschalter bzw. RCD (residual current detector) ausgestaltet ist bzw. eine Differenzstromschutzfunktion umfasst. Bei der letzteren Option ist an die Integration einer Differenzstromschutzfunktion in einem Leitungsschutzschalter zu denken, d.h. an einen MCB+RCD bzw. RCBO (Residual current operated Circuit-Breaker with Overcurrent protection). Bei dieser Ausgestaltung z.B. als RCBO wäre die Prozessoreinheit neben der Ausgabe einer Warnung bei Überschreiten des ersten Schwellenwerts und eines evtl. vorgesehenen zweiten Schwellenwerts zur Auswertung des Differenzstromsignals auf Überschreiten eines dritten Schwellenwertes für den Differenzstrom und zur Ausgabe eines Unterbrechungssignals bei Überschreiten des dritten Schwellenwerts an die Unterbrechungseinheit ausgestaltet. In Kurzschreibweise könnte man diese Lösungen als MCB+RCM bzw. RCBO+RCM beschreiben. Schließlich könnte der Schalter auch zusätzlich als Brandschutzschalter bzw. AFDD (arc fault detection device) ausgestaltet sein. Die Funktionen eines Brandschutzschalters, eines Leitungsschutzschalters und eines Differenzstromschutzschalters können in einem Schalter kombiniert werden, vgl. DE 10 2010 021 068 A1 (AFDD + MCB), DE 10 2016 223 264 A1 (AFDD + RCD) und DE 10 2016 218 960 A1 (AFDD + RCBO). Daher könnte der Schalter auch in folgenden Ausführungen realisiert sein: MCB+AFDD+RCM oder RCBO+AFDD+RCM realisiert sein. Der Begriff "Leitungsschutzschalter" im Sinne der Anmeldung ist also so zu verstehen, dass neben der Schutzfunktion eines MCBs (Kurzschluss und Überlast) weitere Schutzfunktionen wie Differenzstromschutz und Störlichtbogenschutz (AFDD-Funktion) umfasst sein können.

Insbesondere könnte es sich also um einen Schalter handeln, der für die Befestigung an einer typischerweise genormten Schiene (z.B. DIN-Norm, Hutschiene ...) ausgebildet ist (für die vorgehend aufgelisteten Schaltertypen gibt es entsprechende Ausführungen). Dabei kann es um einen Schalter mit einer oder mehreren Teilungseinheiten (TE) handeln, der dann z.B. in einem Schaltschrank zum Einsatz kommt.

Gemäß einer Ausgestaltung ist der erfindungsgemäße Schalter für eine Eingabe (z.B. mittels eines Knopfs) eines externen Schaltsignals und dessen Weiterleitung an die Prozessoreinheit ausgestaltet (z.B. Reset-Knopf bzw. evtl. auch Touchscreen mit zusätzlicher Eingabemöglichkeit für Schaltparameter). Die Prozessoreinheit ist dann zur Ausgabe eines Steuersignals bei Empfang des externen Schaltsignals an die Unterbrechungseinheit eingerichtet, wodurch die Unterbrechungseinheit veranlasst wird, den Schaltkreis zu schließen oder zu unterbrechen.

Gemäß einer Ausgestaltung ist der Schalter mit einer Kommunikationsschnittstelle (insb. Drahtlosschnittstelle) zur Übermittlung eines Warnsignals an einen Empfänger zur Verarbeitung oder/und Darstellung ausgestaltet. Dieser Empfänger kann z.B. ein (evtl. an einer Normschiene befestigbares) Kommunikationsmodul sein, das Daten von Niederspannungselementen eines Schaltschranks in die Cloud weiterleitet. Ggf. sind über die Kommunikationsschnittstelle auch andere Information, z.B. Analysedaten, Verbrauchsdaten etc. weiterleitbar.

Gemäß einer Weiterbildung des Erfindungsgegenstandes ist der Schalter mit einem Spannungsmesselement zur Überwachung einer an dem Schaltkreis anliegenden Spannung ausgebildet. Durch diese Spannungserfassung können durch die Prozessoreinheit weitergehende Überprüfungen bzw. Analysen gemacht werden, z.B. bzgl. Über- oder Unterspannung, Spannungsstabilität etc. Eine Spannungsmessung kann auch für eine Verbrauchsermittlung relevant sein.

Gemäß einer Ausgestaltung ist der Schalter mit einer Verbrauchsmesseinheit (man verwendet in diesem Zusammenhang auch den englischen Begriff Metering) zur Bestimmung eines auf den Schaltkreis bezogenen Energieverbrauchs versehen.

Generell kann die Prozessoreinheit zur Analyse von Strom- und/oder Spannungsdaten ausgestaltet sein. Für die Analyseergebnisse kann eine Übermittlung and eine übergeordnete Überwachungsstelle bzw. Überwachungsvorrichtung vorgesehen sein.

Gemäß einer Weiterbildung des erfindungsgemäßen Schalters umfasst dieser eine Temperaturmessvorrichtung, welche für die Weiterleitung von Messwerten an die Prozessoreinheit ausgestaltet ist. Die Prozessoreinheit ist dann für den Vergleich des Temperaturwerts mit einem Schwellenwert und der Generierung eines Warnsignals bei Überschreiten des Schwellenwerts ausgestaltet. Es kann vorgesehen sein, dass dieses Warnsignal über die Anzeige dem Bedienpersonal optisch signalisiert wird. Alternativ oder zusätzlich kann eine Übertragung des Warnsignals an eine übergeordnete Überwachungsstelle bzw. Überwachungsvorrichtung vorgesehen sein.

Die Erfindung betrifft auch einen Schaltschrank mit einer Vielzahl von Schutzschaltern. Dieser weist eine Anzahl von Schutzschaltern mit einer bestimmten Schutzfunktion oder einer bestimmten Kombination von Schutzfunktionen auf. Eine Untermenge der Anzahl von Schutzschaltern erfindungsgemäß mit einer RCM-Funktion ausgestaltet. Insb. kann es sich bei der Anzahl von Schaltern um eine Kombination von MCB und MCB+RCM handeln, die bezüglich der Größe der Untermenge und der Positionierung der MCB+RCM für den Schaltschrank optimiert ist.

Die Erfindung betrifft auch ein Differenzstromüberwachungssystem mit einem erfindungsgemäßen Schalter mit Kommunikationsschnittstelle und einer Überwachungsvorrichtung, welche dafür eingerichtet ist, laufend von dem Schalter auf den erfassten Differenzstrom bezogenen Daten zu erhalten und abzuspeichern oder/und anzuzeigen. Insbesondere kann eine Speicherung einer Historie von Differenzstrom bezogenen Daten vorgesehen sein, durch welche eine bessere Analyse von Fehlerquellen möglich wird. Schalter und Überwachungsvorrichtung können direkt oder indirekt (z.B. über einen Datensammler) miteinander verbunden sein. Es kann eine derartige Überwachungsvorrichtung mit einer Anzeige für Differenzstromwerte versehen sein, auf der zumindest optional ein Differenzstromwert anzeigbar ist. Insbesondere kann vorgesehen sein, dass der Schalter mit LEDs und Blinksignalen agiert, während auf einer Anzeige der Überwachungsvorrichtung der einer Blinkinformation entsprechende, evtl. auch ein Frequenzband bezogene Stromwert angezeigt wird. Diese Anzeige kann auch durch ein an die Überwachungsvorrichtung übermitteltes Warnsignal getriggert werden.

Die Erfindung wird im Folgenden im Rahmen eines Ausführungsbeispiels näher beschrieben. Es zeigen:
Fig. 1: den Aufbau eines erfindungsgemäßen Leitungsschutzschalters,
Fig. 2: den Aufbau des Leitungsschutzschalters von Fig. 1 mit Konkretisierungen zur Realisierung einzelner Elemente,
Fig. 3: eine Draufsicht auf einen Leistungsschutzschalter mit einer LED zur Anzeige von Differenzstrom-Warninformationen, und
Fig. 4: eine schematische Darstellung eines Konzepts für die Weiterleitung bzw. Weiterverarbeitung von Daten eines Leitungsschutzschalters gem. Fig. 1 bzw. Fig. 2.

Erfindungsgemäß wird eine Differenzstromüberwachung (häufig auch als RCM bzw. residual current monitoring bezeichnet) in einem Schalter integriert, der für die Unterbrechung eines Schaltkreises ausgebildet ist. Im Weiteren wird dieses erfinderische Konzept anhand eines Leitungsschutzschalters konkretisiert. Leitungsschutzschalter - häufig mit LS-Schalter - abgekürzt sind auch unter der Bezeichnung MCB (moulded circuit breaker) bekannt. Diese Schalter sind deswegen für das erfindungsgemäße Vorgehen, d.h. die Integration einer Differenzstromüberwachung, besonders geeignet, weil sie typischerweise in größerer Anzahl und diversesten Einsatzszenarien verwendet werden. Dadurch gibt es mannigfaltige Möglichkeiten, die Differenzstromüberwachung zu platzieren. Bei der Konzeption einer Energieverteillösung kann entsprechend der Anforderungen dieser Lösung mit zwei Typen von MCBs agiert werden, nämlich MCBs mit Differenzstromüberwachung und herkömmlichen MCBs. Die MCBs mit Differenzstromüberwachung werden dann selektiv dort eingesetzt, wo eine Überwachung sinnvoll ist, z.B. an besonders kritischen Stellen. In einem Schaltschrank z.B. ist in der Regel ein eigener Differenzstromschutzschalter vorgesehen, der aber dann für das Gesamtsystem oder zumindest für ein Teilsystem zuständig ist. Mittels erfindungsgemäßer MCBs kann dann eine feingranularere Überwachung - evtl. sogar auf der Ebene einzelner Abzweige - durchgeführt werden, wobei dann die Differenzstromwarnschwellen geeignet niedriger als die Auslöseschwelle eines übergeordneten Differenzstromschutzschalters eingestellt ist. D.h., ein Gesamtsystem umfassend Leitungsschutzschaltern mit Differenzstromüberwachung und konventionellen Leistungsschutzschaltern kann gut bzgl. der Überwachungsfunktion und des Aufwands (herkömmliche Leitungsschutzschalter sind vergleichsweise preisgünstig) optimiert werden.

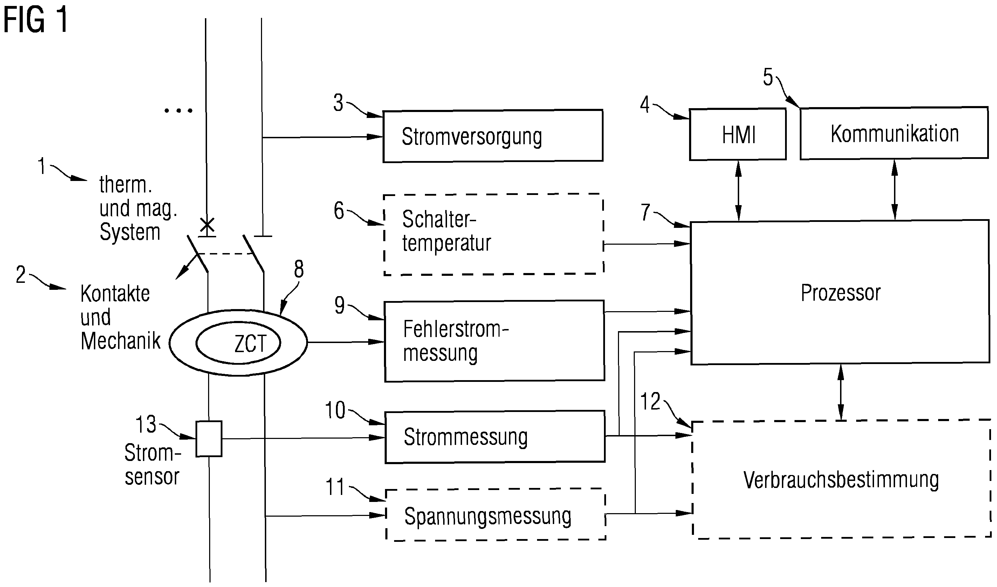

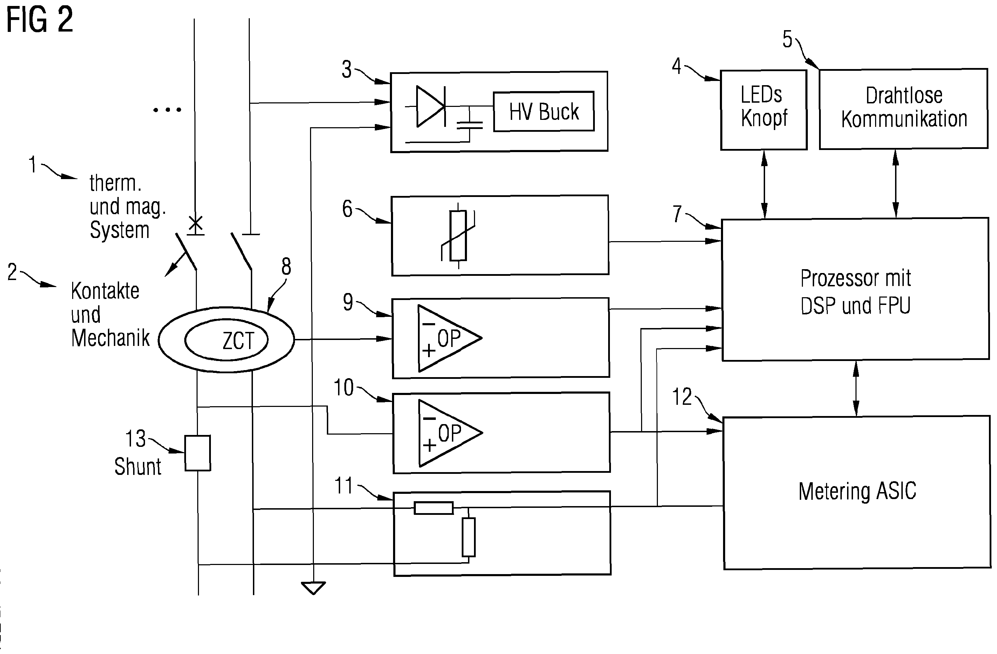

In Fig. 1 und Fig. 2 ist ein derartiger Leistungsschutzschalter dargestellt. Mit den Bezugszeichen 1 und 2 sind Elemente eines herkömmlichen Leitungsschutzschalters bezeichnet. Dieser umfasst typischerweise einen Fest- und einen Bewegtkontakt. Über beide Kontakte ist eine Strombahn geführt. Der Bewegtkontakt (bzw. bewegliche Kontakt) ist Teil einer mechanischen Konstruktion, die bei eingeschaltetem Leitungsschutzschalter mittels einer Feder oder Federn derart vorgespannt ist, dass die Federkräfte die Konstruktion in eine Ausschaltposition bringen, in der beide Kontakte getrennt sind. Der Federkraft entgegen wirkt ein Haltelement, das dafür sorgt, dass die Kontakte sich berühren, d.h. der Schalter im eingeschalteten Zustand bleibt. Leitungsschutzschalter lösen üblicherweise bei Kurzschluss oder Überstrom aus. Die Kurzschlussauslösung ist dabei meist mit einer Spule realisiert, die so angeordnet, im Strompfad verschaltet und dimensioniert ist, dass sie bei Kurzschluss ein Magnetfeld erzeugt, Diese bewegt einen Stößel, welches auf das Halteelement derart wirkt, dass die Konstruktion kollabiert bzw. die Federkräfte die Kontakte trennen. Der Überstromschutz ist üblicherweise mittels eines sich reversibel verformenden Bimetall realisiert, welches mit seiner Verformung ebenfalls die Konstruktion kollabieren lässt. Ein Leistungsschutzschalter besitzt in der Regel auf der Außenseite einen Knopf bzw. ein Schaltelement, mit dem sich die Konstruktion wieder in die Position der Vorspannung bringen lässt, in der Fest- und Bewegtkontakt kontaktieren. D.h., mittels dieses Knopfs lässt sich Leistungsschutzschalter einschalten.

In Fig. 1 sind die Elemente für den Kurzschluss- und Überstromschutz mit dem Bezugszeichen 1 und die Kontakte sowie die Konstruktion zu deren Trennung mit dem Bezugszeichen 2 bezeichnet. Im Gegensatz zu herkömmlichen Leistungsschutzschaltern umfasst der Schalter gem. Fig. 1 die im Folgenden aufgeführten Elemente, mit denen eine Differenzstromüberwachung bzw. eine RCM-Funktion realisiert ist. Der Schalter ist mit einem Differenzstromsensor 8 versehen. Häufig werden Differenzstromsensoren durch sogenannten Nullphasenstromwandler bzw. ZCTs (zero-phase current transformer) realisiert, durch den das aggregierte Signal der durch ihn geführten Phasen gemessen wird. Ein einem System mit nur einem Phasenleiter L und einem Neutralleiter N könnte beispielsweise auch eine Summenstromwander, durch welchen L und N geführt sind, zum Einsatz kommen. Das durch den Differenzstromsensor 8 gemessene Signal wird durch eine geeignete Elektronik bzw. Schaltung 9 bearbeitet. Diese kann aus einer Tiefpassfilterung und einer Verstärkung bestehen (letzteres ist durch die Darstellung eines Operationsverstärkers in Fig. 2 angedeutet). Das bearbeitete Signal wird einem Prozessor 7 zugeführt. Durch den Prozessor 7 wird überprüft, ob Kriterien für die Ausgabe eines Warnsignals erfüllt sind. Im einfachsten Fall erfolgt dies mit einem Schwellenwertkriterium. Die Ausgabe eines Warnsignals erfolgt über eine Anzeige, die Teil eines Bedienbereichs mit Mensch-Maschinen-Schnittstelle bzw. mit HMI (Human-Machine Interface) 4 sein kann. Die Anzeige kann - wie in Fig. 2 angedeutet - mittels einer LED (light emitting diode) oder mehreren LEDs realisiert sein.

Es kann im Bedienbereich ein Bedienelement oder ein Bedienknopf zum Einschalten oder/und zum Zurücksetzen des Schalters angeordnet sein. Auch mehrere Knöpfe sind denkbar. Es können mehrere LEDs mit verschiedenen Farben vorgesehen sein, wobei mehrere (vorzugsweise zwei) LEDs parallel bzw. getrennt einen Lichtaustrittsbereich am Gehäuse des Schalters aufweisen können. Alternativ kann ein einziges mit einem transparenten Material gebildeten Lichtaustrittsfeld am Gehäuse vorgesehen sein, in welches Licht von verschiedenen LEDs einkoppelbar ist.

Das Warnsignal kann dann einer Farbe oder/und einem Blinkmuster entsprechen. Gemäß einer Ausgestaltung des Erfindungsgegenstands sind zwei Warnschwellen vorgesehen. Die beiden Warnschwelle könnte dann auch mittels Blinkmuster unterschiedlicher Frequenz kodiert sein (höhere Frequenz entspricht z.B. der höheren Warnschwelle). Ausgegebene Warnsignale erlauben dem Bedienpersonal Schritte zu ergreifen, die einer Unterbrechung des Stromkreises (z.B. durch einen an anderer, übergeordneter bzw. vorgelagerter Stelle vorgesehenen Fehlerstromschutzschalter) vorbeugen. Neben der Anzeige von Warnsignalen kann auch vorgesehen sein, dass Betriebsmodi durch die Anzeige 4 dargestellt werden.

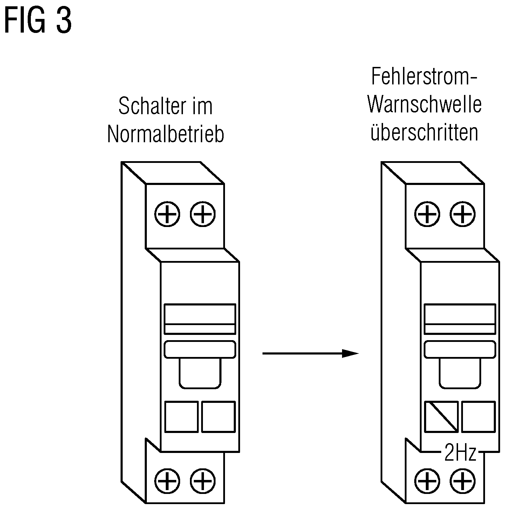

Fig. 3 illustriert eine Realisierungsmöglichkeit mit zwei LEDs 41 und 42, die unterhalb eines Kopfes zum Einschalten bzw. Zurücksetzen 42 angeordnet sind. Im Regelbetrieb sind beide LEDs 41 und 42 grün. Beim Erreichen einer ersten Differenzstrom-Warnschwelle wechselt eine LED 41 zwischen Grün und Gelb, d.h. blinkt mit einer Frequenz von 2 Hz. Es stehen bei dieser Lösung drei Parameter zur Verfügung, nämlich die zwei verschiedenen LEDs, die Farbe und die Blinkfrequenz, womit sich eine Vielzahl von Informationen kodieren lassen, die sich z.B. sowohl auf die Art der Störung (Differenzstrom, Kurzschluss, Überstrom, Erreichen einer Temperaturschwelle, Überspannung, Unterspannung etc.) als auch auf die Kritikalität einer Schwelle (z.B. bei Vorsehen einer ersten und einer zweiten Warnschwelle) beziehen können.

Für die Versorgung des Prozessors 7 ist eine Energieversorgung 3 vorgesehen, die sich aus dem überwachten Stromkreis speist. Wie in Fig. 2 angedeutet, kann diese Energieversorgung 3 mit einer Gleichrichtung (Z.B. Einweggleichrichter) und einem Abwärtswandler für hohe Spannungen (high voltage buck) gebildet sein, um z.B. den Prozessor 7 mit 5V oder 3,3V Gleichspannung zu versorgen. Der Schalter kann zudem mit einem Stromsensor 13 versehen sein, welcher z.B. mittels eines Shunt-Widerstands (vgl. Fig. 2) realisiert ist. Das gemessene Stromsignal wird mit einer Schaltung 10 zur Unterstützung der Analyse des Signals bearbeitet. Die Bearbeitung kann aus einer Tiefpassfilterung und einer Verstärkung bestehen (letzteres ist durch die Darstellung eines Operationsverstärkers in Fig. 2 angedeutet). Das bearbeitete Signal wird dann zwecks Analyse dem Prozessor 7 zugeführt. Im einfachsten Fall werden laufend Stromwerte (Amplitudenwerte oder RMS-Werte) erfasst, die z.B. für Diagnosezwecke verwendet werden können. In einer Ausgestaltung kann auch ein zusätzliches, entsprechend anders kodiertes Warnsignal vorgesehen sein, das einen kritischen Zustand bzgl. des gemessenen Stroms signalisiert. Z.B. könnte dieses Warnsignal auf eine hohe Stromlast hinweisen, die noch nicht zur Auslösung führt. Eine entsprechende Information kann z.B. für eine Anpassung der durch den Stromkreis versorgten Last relevant sein.

Der Schalter ist mit einer Kommunikationsschnittstelle 5 (vorzugsweise mit einer drahtlosen Schnittstelle, wie in Fig. 2 angedeutet) versehen. Über diese Kommunikationsschnittstelle 5 können durch den Prozessor 7 Daten extern bereitgestellt werden. Diese Daten können, aber müssen nicht die an der Anzeige 4 angezeigten (evtl. anders kodierten) Informationen enthalten, können zu diesen auch komplementär sein oder in keinem Zusammenhang mit diesen stehen. Insb. können nach extern übertragene Daten zu Diagnosezwecken verwendet werden. Stromwerte (z.B. maximaler Stromwert, Verlauf der Stromwerte), die zur Auslösung (Tripping) geführt haben, lassen dann z.B. Rückschlüsse auf den Fehler zu, der die Auslösung bewirkt hat (Z.B. Kurzschluss oder Überstrom). Es ist weiter auch möglich, dass über die Schnittstelle 5 Einstellungen des Schalters bzw. der Prozessorabläufe geändert werden.

Optional kann eine Verbrauchsmessung vorgesehen sein. Ausgehend von den für den überwachten Stromkreis zutreffenden Strom- und Spannungsdaten wird dann von einer entsprechenden Vorrichtung (metering unit 12) der Verbrauch bestimmt. Diese Vorrichtung kann z.B. mit Hilfe einer anwendungsspezifischen integrierten Schaltung bzw. eines ASICs (application-specific integrated circuit) realisiert sein (vgl. Fig. 2). Neben der Bereitstellung von Stromdaten für die Vorrichtung zur Verbrauchsmessung 12 (über den Stromsensor 13 und die Schaltung 10 zur Bearbeitung des Messsignals) ist für die Erfassung der Spannungsinformationen dann ein Spannungssensor 11 vorgesehen, der z.B. mit einem Spannungsteiler (vgl. Fig. 2) gebildet ist. Die Spannungsdaten können für Analysezwecke auch dem Prozessor 7 zugeführt werden. Die Spannungsinformationen können auch verwendet werden, um Über- oder Unterspannung zu erkennen und evtl. ein entsprechendes Warnsignal an der Anzeige 4 anzuzeigen oder/und über die Kommunikationsschnittstelle 5 an eine übergeordnete Überwachungsinstanz zu melden. Die Spannungserfassung kann dabei auch nur letzterem Zweck dienen, d.h. nicht in Verbindung mit einer Verbrauchsmessung vorgesehen sein.

Schließlich kann auch eine Temperaturmessung mittels eines Temperatursensors 6 vorgesehen sein, die Temperaturdaten an den Prozessor 7 liefert. Diese ist z.B. realisiert mit einem Thermistor, z.B. einem Heißleiterwiderstand bzw. NTC-Widerstand. Der Temperatursensor 6 ist z.B. in der Nähe eines Hotspots des Schalters platziert (z.B. stellen in der Regel die Kontakte des Schalters Hotspots dar). Die an den Prozessor 7 gelieferten Temperaturdaten können auch zu einem Warnsignal führen, das z.B. bei Überschreiten eines Schwellenwerts für die absolute Temperatur oder den Temperaturanstieg ausgegeben wird. Das Warnsignal kann über die Anzeige 4 ausgegeben oder/und über die Kommunikationsschnittstelle 5 an eine übergeordnete Überwachungsinstanz geschickt werden.

Der Prozessor 7 kann - wie in Fig. 2 gezeigt - mit einem digitalen Signalprozessor bzw. einem DSP (Digital Signal Processor) und einer Gleitkommaeinheit bzw. FPU (Floating Point Unit) gebildet sein, um eine effiziente Analyse der Daten vornehmen zu können. Beispielsweise werden damit über den Stromsensor 13 und die Schaltung 10 erhaltene Stromwerte und über den Differenzstromsensor 8 und die Schaltung 9 erhaltene Differenzstromwerte analysiert. Diese Werte können z.B. von der Zeitbereichsdarstellung in den Frequenzraum transformiert werden, um separat Grundschwingung und Oberschwingungen zu analysieren. Analyseergebnisse können nicht nur über die Kommunikationsschnittstelle 5 an eine übergeordnete Instanz übermittelt werden. Es ist auch denkbar, dass gem. Kriterien für die Darstellung von bestimmten Warnsignalen auf der Anzeige 4 sich Warnhinweise auf Analyseergebnisse beziehen (z.B. Grundschwingungsfrequenz deutet auf Netzinstabilitäten hin) .

Der Prozessor und die übrige Elektronik kann mittels einer Leiterplattenanordnung bzw. einer PCBA (Printed Circuit Board Assembly) realisiert sein. Diese kann z.B. eine Erdung zwischen dem Shunt-Widerstand 13 und dem Gehäuse des Schalters aufweisen.

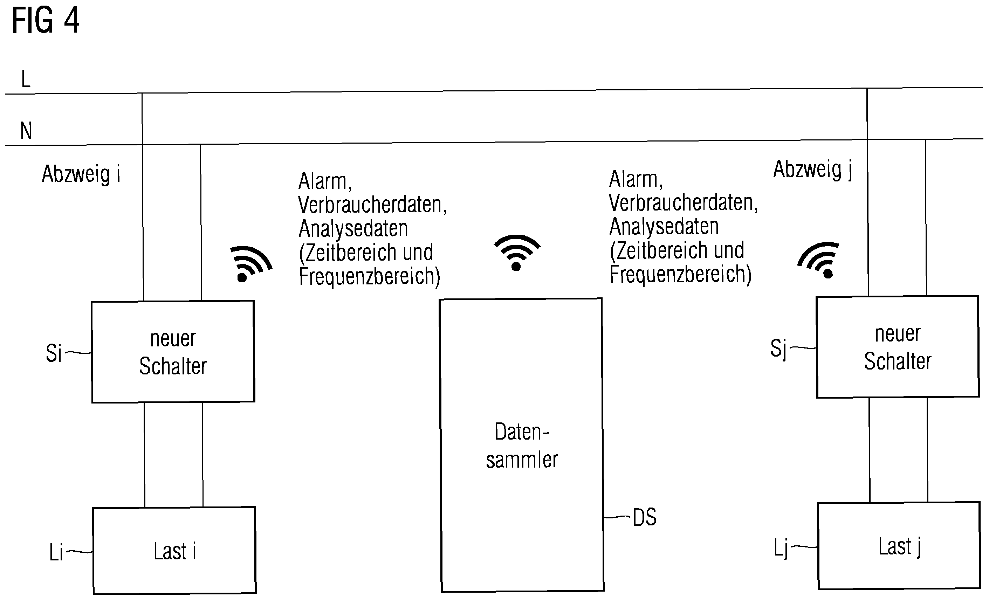

In Fig. 4 ist eine mögliche kommunikative Einbettung erfindungsgemäßer Schalter schematisch dargestellt. Es sind eine Phasenleitung L und eine Neutralleitung N gezeigt, die zwei Abzweige i und j versorgen. Bei beiden Abzweigen ist ein erfindungsgemäßer Schalter Si bzw. Sj eingeschleift. Die Abzweige versorgen Lasten Li bzw. Lj. Beide Schalter Si bzw. Sj haben eine drahtlose Kommunikationsverbindung (z.B. über Bluetooth oder Zigbee) mit eine Datensammler bzw. Data Collector DS und senden Daten betreffend Alarminformationen, Verbrauchsdaten, Strom- und Differenzstromwerte (sowohl Darstellung in Zeitbereich als auch Frequenzanalysedaten) an den Datensammler DS. Bei dem Datensammler handelt sich es z.B. um ein Kommunikationsmodul, das für eine Befestigung an einer Hutschiene ausgestaltet ist und für ein Energieverteilungssystem (z.B. Schaltschrank) die von Schaltern gesendeten Daten sammelt und ggf. aufbereitet an eine zentrale Stelle sendet bzw. im Internet bereitstellt. Ein Kommunikationsmodul dieser Art ist z.B. in der DE 202021000293 U1 beschrieben.

Oben ist nur eine Ausführungsform der Erfindung angegeben. Andere Realisierungen sind denkbar und vom Schutzbereich umfasst. Insb. ist die Erfindung nicht auf Leitungsschutzschalter beschränkt, sondern kann für vielfältige Schaltertypen als Kombination von Schalter und Differenzstromüberwachung zum Einsatz kommen.

## Patentansprüche

1. Leitungsschutzschalter (MCB) zur Unterbrechung eines Schaltkreises,
- mit einer Unterbrechungseinheit (1,2),
- mit einer Differenzstromerfassungseinheit (8) zur Erfassung eines in dem Schaltkreis auftretenden Differenzstroms,
- einer Prozessoreinheit (7), die zur Auswertung eines mit Hilfe der Differenzstromerfassungseinheit erhaltenen Differenzstromsignals auf Überschreiten eines ersten Schwellenwertes für den Differenzstrom und zur Ausgabe eines ersten Signals bei Überschreiten des ersten Schwellenwerts ausgestaltet ist, und
- eine Anzeige (4), welche mit der Prozessoreinheit (7) verbunden und für eine durch Empfang des ersten Signals veranlasste Bereitstellung eines Warnsignals ausgestaltet ist.

2. Leitungsschutzschalter nach Anspruch 1,
**dadurch gekennzeichnet, dass**
er mit einer Differenzschutzfunktion und/oder Brandschutzfunktion ausgestattet ist.

3. Leitungsschutzschalter nach Anspruch 1 oder 2,
**dadurch gekennzeichnet, dass**
- der Schalter eine Kommunikationsschnittstelle (5) zur Übermittlung von Daten an einen Empfänger zur Verarbeitung oder/und Darstellung umfasst, und
- der Prozessor für eine laufende Übermittlung von auf den erfassten Differenzstrom bezogenen Daten über die Kommunikationsschnittstelle (5) an den Empfänger eingerichtet ist.

4. Leitungsschutzschalter nach Anspruch 3,
**dadurch gekennzeichnet, dass**
- der Schalter für eine Frequenzbandzerlegung des erfassten Frequenzstroms ausgebildet ist, und
- die auf den erfassten Differenzstrom bezogenen Daten frequenzbandbezogene Informationen enthalten.

5. Leitungsschutzschalter nach einem der vorhergehenden Ansprüche,
**dadurch gekennzeichnet, dass**
- der Schalter für eine Frequenzbandzerlegung des erfassten Frequenzstroms ausgebildet ist, und
- die Auswertung des mit Hilfe der Differenzstromerfassungseinheit erhaltenen Differenzstromsignals auf Überschreiten eines ersten Schwellenwertes für den Differenzstrom frequenzbandspezifisch erfolgt.

6. Leitungsschutzschalter nach einem der vorhergehenden Ansprüche,
**dadurch gekennzeichnet, dass**
die Prozessoreinheit (7) zur Auswertung des Differenzstromsignals auf Überschreiten eines zweiten, im Vergleich zum ersten höheren Schwellenwertes für den Differenzstrom und zur Ausgabe eines zweiten Signals an die Anzeige (4) bei Überschreiten des zweiten Schwellenwerts ausgestaltet ist.

7. Leitungsschutzschalter nach einem der vorhergehenden Ansprüche,
**dadurch gekennzeichnet, dass**
der Schalter mit einem Strommesselement (13) zur Überwachung eines im Schaltkreis übertragenen Stroms gebildet und für eine Unterbrechung des Schaltkreises bei Auftreten eines mit Hilfe des Strommesselements (13) erfassten Kurzschlussstroms oder Überlaststroms ausgebildet ist.

8. Leitungsschutzschalter nach einem der vorhergehenden Ansprüche,
**dadurch gekennzeichnet, dass**
- die Prozessoreinheit (7) zur Auswertung des Differenzstromsignals auf Überschreiten eines dritten Schwellenwertes für den Differenzstrom und zur Ausgabe eines Unterbrechungssignals bei Überschreiten des dritten Schwellenwerts an die Unterbrechungseinheit ausgestaltet ist.

9. Leitungsschutzschalter nach einem der vorhergehenden Ansprüche,
**dadurch gekennzeichnet, dass**
es sich um einen für die Befestigung an einer Schiene ausgebildeten Schalter handelt.

10. Leitungsschutzschalter nach einem der vorhergehenden Ansprüche,
**dadurch gekennzeichnet, dass**
- der Schalter für eine Eingabe eines externen Schaltsignals und dessen Weiterleitung an die Prozessoreinheit ausgestaltet ist, und
- die Prozessoreinheit (7) zur Ausgabe eines Steuersignals bei Empfang des externen Schaltsignals an die Unterbrechungseinheit (1,2) ausgestaltet ist, wodurch die Unterbrechungseinheit (1,2) veranlasst wird, den Schaltkreis zu schließen oder zu unterbrechen.

11. Leitungsschutzschalter nach einem der vorhergehenden Ansprüche,
**dadurch gekennzeichnet, dass**
der Schalter mit einem Spannungsmesselement (11) zur Überwachung einer an dem Schaltkreis anliegenden Spannung ausgebildet ist.

12. Leitungsschutzschalter nach einem der vorhergehenden Ansprüche,
**dadurch gekennzeichnet, dass**
der Schalter eine Verbrauchsmesseinheit (12) zur Bestimmung eines auf den Schaltkreis bezogenen Energieverbrauchs umfasst.

13. Leitungsschutzschalter nach einem der vorhergehenden Ansprüche,
**dadurch gekennzeichnet, dass**
die Prozessoreinheit (7) zur Analyse von Strom- und/oder Spannungsdaten ausgestaltet ist.

14. Leitungsschutzschalter nach einem der vorhergehenden Ansprüche,
**dadurch gekennzeichnet, dass**
- er eine Temperaturmessvorrichtung (6) umfasst, welche für die Weiterleitung von Messwerten an die Prozessoreinheit (7) ausgestaltet ist, und
- die Prozessoreinheit (7) für den Vergleich des Temperaturwerts mit einem Schwellenwert und der Generierung eines Warnsignals bei Überschreiten des Schwellenwerts ausgestaltet ist.

15. Schaltschrank mit einer Vielzahl von Schutzschaltern, aufweisend eine Anzahl von Schutzschaltern mit einer bestimmten Schutzfunktion oder einer bestimmten Kombination von Schutzfunktionen, wobei eine Untermenge der Anzahl von Schutzschaltern nach einem der Ansprüche 1 bis 12 ausgestaltet ist.

16. Differenzstromüberwachungssystem, mit
- einem Leitungsschutzschalter nach einem der Ansprüche 2 bis 14, und
- einer Überwachungsvorrichtung, welche dafür eingerichtet ist, laufend von dem Schalter auf den erfassten Differenzstrom bezogenen Daten zu erhalten und abzuspeichern oder/und anzuzeigen.
